# EUROPÄISCHE PATENTSCHRIFT

(11) **EP 4 120 008 B1**
(45) Veröffentlichungstag und Bekanntmachung des Hinweises auf die Patenterteilung: **04.06.2025**
(21) Anmeldenummer: 22168816.1
(22) Anmeldetag: 19.04.2022
(51) Int. Cl.: G02F 1/1333

(54) **DISPLAYANORDNUNG**
DISPLAY ARRANGEMENT
DISPOSITIF D'AFFICHAGE

(30) Priorität: 15.07.2021 DE 102021118303
(43) Veröffentlichungstag der Anmeldung: 18.01.2023
(73) Patentinhaber: Marquardt GmbH, 78604 Rietheim-Weilheim (DE)
(72) Erfinder: LEIBER, Tobias, 78052 VS-Obereschach (DE); BÜHLER, Karl Heinz, 78669 Wellendingen (DE); MARK, Thorsten, 78554 Aldingen (DE)
(74) Vertreter: Staeger & Sperling Partnerschaftsgesellschaft mbB

(56) Entgegenhaltungen:
- DE-A1- 102011 005 379
- JP-A- 2013 238 726
- US-A1- 2021 088 831

## Beschreibung

Diese Erfindung betrifft ein Verfahren zum Bonding (allgemein Verbinden) einer Anzeigeeinrichtung, insbesondere zum Bonden einer Abdeckung oder eines Rahmens auf ein Display oder Anzeigesubstrat oder umgekehrt, und bezieht sich ferner auf eine durch das Verfahren zusammengebaute Anzeigeeinrichtung mit einem Display (auch Display-Baugruppe genannt) mit insbesondere einem Deckglas oder Kunststoff.

Im der Stand der Technik sind die Lösungen typischerweise auf das Verbinden von Substraten mit einem gleichen Abstand zwischen dem Rahmen und den weiteren Bauteilen beschränkt. Beispiele für solche Anwendungen sind in der Unterhaltungselektronik, wie Smartphones und Tablets, Zentraldisplays und Industriedisplays bekannt. Das Dokument WO 2014/061478 A1 offenbart ein mit einer Klebeschicht ausgestattetes transparentes Oberflächenmaterial, das zum Schützen eines Anzeigefelds und eines Displays, das dieses Oberflächenmaterial umfasst, geeignet ist.

Das Dokument JP 2009-93158 A beschreibt ein Display, wobei das Display eine Abdeckung mit Dekorationsschicht und eine Ausgleichsschicht umfasst. Diese Ausgleichsschicht beseitigt durch die Dicke der Dekorschicht auftretende Niveauunterschiede.

Die US2011/0304812 A1 offenbart ein Display mit einem Displaysubstrat, einer flachen Abdeckung und einer transparenten Füllschicht. Ein zwischen dem Displaysubstrat und der flachen Abdeckung angeordneter Damm wird dazu verwendet, um die flüssige transparente Füllschicht während des Herstellungsprozesses zu kontrollieren.

Das Dokument US 2015/0341272 A1 offenbart eine elektrooptische Anzeigeanordnung mit einer elektrooptischen Anzeige, einem Rahmen und einer transparenten Abdeckung, wobei eine Oberfläche der transparenten Abdeckung gekrümmt ist.

Das Dokument DE 10 2011005 379 A1 offenbart ein Verfahren zum Herstellen eines optoelektrischen Geräts und das Dokument US 2011/0187960 A1 offenbart eine Anzeigevorrichtung, die folgendes umfasst: ein Anzeigefeld und ein tafelähnliches Element, das mit einem Klebstoff aus einem ultraviolett-härtbaren Harz an die Anzeigetafel angebunden ist.

Aus der EP 3 218 766 B1 ist ferner eine verbesserte Lösung bekannt und zwar ein Display umfassend ein rechteckiges, im Wesentlichen flaches Display-Substrat und eine Abdeckung mit einer gekrümmten Fläche, wobei die gekrümmte Fläche durch ein Bonding-Material an dem flachen Display-Substrat geklebt ist, sowie einen rechteckförmigen Damm, der zwischen dem Display-Substrat und der Abdeckung angeordnetes Bonding-Material enthält, wobei das Display-Substrat, in einer Projektion auf eine parallel zu dem flachen Display-Substrat verlaufende Ebene betrachtet, entlang seinem Umfang von dem rechteckförmigen Damm allseitig beabstandet ist.

Nachteilig ist dabei, dass das Aufbringen eines Bonding-Materials auf die gekrümmte Fläche der Abdeckung zum Kleben der Abdeckung an das flache Display-Substrat zur Bildung des Displays und das korrekte Platzieren des Display-Substrats auf dem unausgehärteten Bonding-Material problematisch ist und bei ungenauem Ausrichten zu Fehlern führen kann. Ferner ist es nachteilig, wenn der Damm allseitig dazu verwendet wird, das Bonding-Material zwischen dem Display-Substrat und der Abdeckung gleichmäßig zu halten.

Weiterer druckschriftlicher Stand der Technik im vorliegenden technischen Gebiet ist in den Dokumenten JP 2013 238 726 A, DE 10 2011 005 379 A1 und US 2021/088 831 A1.

Vor diesem Hintergrund liegt der vorliegenden Erfindung die technische Problemstellung zugrunde, eine verbesserte konzeptionelle Lösung und ein verbessertes Bonding bereit zu stellen, welches die vorbesagten Nachteile nicht aufweist.

Erfindungsgemäß wird hierzu eine Displayanordnung umfassend ein rechteckiges, im Wesentlichen flaches Display-Substrat und eine Abdeckung mit einem Verbindungsbereich an dem das Display-Substrat durch ein Bonding-Materialtrzw geklebt ist, vorgeschlagen, wobei die Abdeckung einen rechteckförmigen Damm aufweist oder ausbildet, welcher das Bonding-Material enthält, wobei das Display-Substrat in einer Projektion auf eine parallel zu dem flachen Display-Substrat verlaufenden Ebene betrachtet, entlang seinem Umfang an dem rechteckförmigen Damm mit zwei seiner Seitenkanten am Damm oder der von dem Damm gebildeten Rahmenkante der Abdeckung unmittelbar anliegt. Erfindungsgemäß ist ferner vorgesehen, dass das Display-Substrat vollständig mit zwei Seitenkanten an dem Damm anliegt und zwar jeweils entlang der gesamten Seitenkante.

Ebenfalls erfindungsgemäß ist es, wenn die beiden Seitenkanten, die an dem Damm anliegen, zwei nicht gegenüberliegende, sondern über eine Ecke des Display-Substrats miteinander verbundene Seitenkanten sind.

In einer ebenfalls vorteilhaften Ausführungsform der Erfindung ist vorgesehen, dass die Rahmenkante im Bereich des Damms an wenigstens einer dem DisplaySubstrat zugewandten Seiten eine Sägezahnkontur aufweist und das DisplaySubstrat an den nach innen ragenden Sägezähnen anliegt.

Eine weitere bevorzugte Ausgestaltung der Erfindung sieht vor, dass die Rahmenkante an zwei einander angrenzenden Seiten eine Sägezahnkontur aufweist und das Display-Substrats an jeweils den nach innen ragenden Sägezähnen mit beiden Seitenkanten unmittelbar daran anliegen.

In einer weiteren bevorzugten Ausgestaltung der Erfindung ist vorgesehen, dass der Damm integral mit der Abdeckung ausgebildet ist.

Erfindungsgemäß ist zwischen wenigstens einer derjenigen Seitenkanten des Display-Substrats, die nicht an dem Damm unmittelbar anliegen, und dem dort daneben liegenden Damm ein Abstandhalter angeordnet ist. Bevorzugt ist es, wenn der Abstandhalter wenigstens ein Federelement aufweist, welches das Display-Substrat mit der jeweils gegenüberliegenden am Damm anliegenden Seitenkante gegen den Damm drückt. Das Federelement kann zum Beispiel ein gebogenes Federblech sein, welches eine Federkraft auf die Seitenkante des Display-Substrats ausübt. Besonders vorteilhaft ist es, wenn zwischen jeweils zwei miteinander (über die Ecke) verbundenen Seitenkanten des Display-Substrats und dem dort daneben liegenden Damm jeweils ein oder mehrere Abstandhalter vorgesehen sind. Dadurch erzielt man eine resultierende Kraft, die das DisplaySubstrat in die schräg gegenüberliegende Ecke des Rahmens drückt.

Ein weiterer Aspekt der vorliegenden Erfindung betrifft neben der Displayanordnung als solcher auch ein Verfahren zur Herstellung einer wie zuvor beschriebenen Displayanordnung mit den folgenden Schritten:
a. Bereitstellen eines im Wesentlichen rechteckigen und flachen DisplaySubstrats und einer Abdeckung mit einem Verbindungsbereich an dem das Display-Substrat durch ein Bonding-Material bzw. ein Verbindungsmaterial angeklebt werden soll, wobei die Abdeckung einen rechteckförmigen Damm ausbildet
b. Montieren des Display-Substrat derart an der Abdeckung, dass in einer Projektion auf eine parallel zu dem Display-Substrat verlaufende Ebene betrachtet, das Display-Substrat entlang seinem Umfang an dem rechteckförmigen Damm mit wenigstens einer oder zwei seiner Seitenkanten unmittelbar am Damm oder der von dem Damm gebildeten Rahmenkante der Abdeckung anliegt und
c. Einfüllen mindestens eines Bonding-Materials in den Damm und vorzugsweise in die zur Klebung vorgesehenen Bereiche, um das Display-Substrat mit der Abdeckung zu klebend verbinden.

In einer weiteren bevorzugten Ausgestaltung des erfindungsgemäßen Verfahrens ist vorgesehen, dass im genannten Schritt b) wenigstens ein mit einem Federelement ausgestatteter Abstandhalter zwischen eine Seitenkante des Display-Substrats und der Abdeckung, vorzugsweise dem Damm eingebracht wird, so dass das Display-Substrats mit seiner entsprechend gegenüberliegenden Seitenkante gegen den Damm gedrückt wird.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt.

Es zeigen:
- Fig.1: eine Ansicht einer Displayanordnung, die aus dem Stand der Technik bekannt ist und
- Fig. 2: eine Ansicht einer erfindungsgemäßen Displayanordnung.

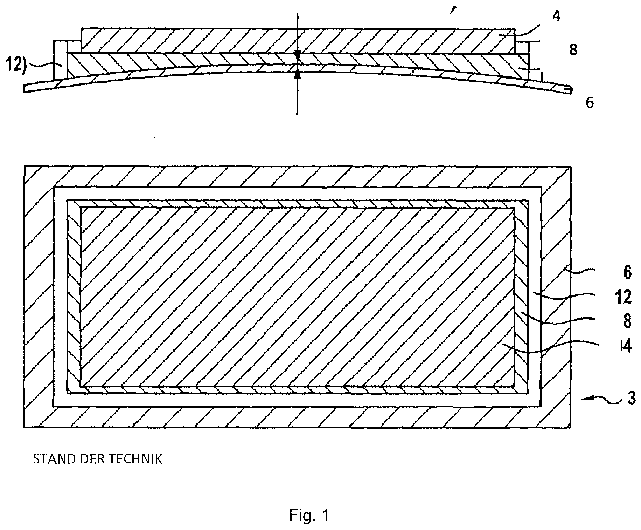

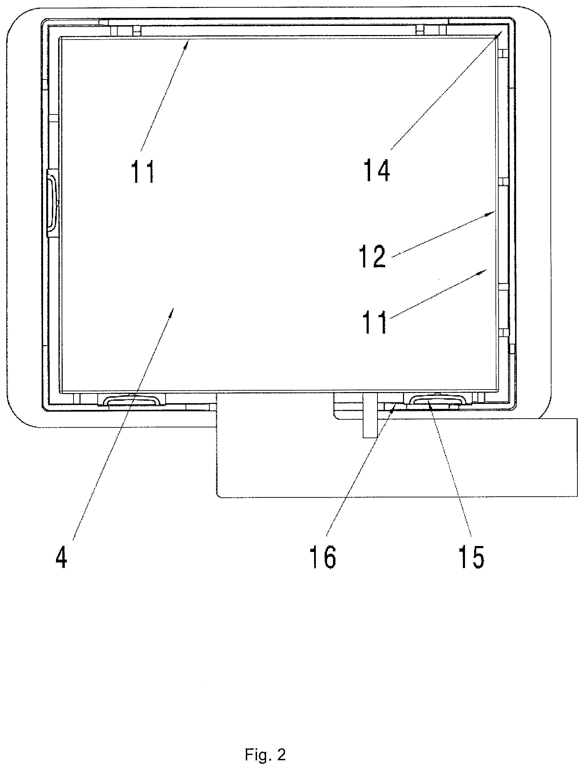

Im Folgenden wird die Erfindung anhand einer beispielhaften Ausführungsform mit Bezug auf die Figuren 1 und 2 näher beschrieben, wobei gleiche Bezugszeichen in den Figuren auf gleiche funktionale und/oder strukturelle Merkmale hinweisen.

Die Figur 1 zeigt eine schematische Darstellung einer Lösung aus dem Stand der Technik und zwar eine Querschnittsseitenansicht eine Displayanordnung 1 mit einem LCD-Modul (oder Display-Substrat) 4 an einer Abdeckung 6 mit nicht ebener oder ungleichmäßiger Oberfläche unter Verwendung eines Verbindungsmaterials 8. Darunter zeigt die Fig. 1 auch eine Ansicht auf die Oberseite der Displayanordnung 1. Das bekannte Konzept besteht darin, mindestens einen Damm 12, der das Verbindungsmaterial 8 für das Bonden des Displaysubstrats 4 zu einer Abdeckung 6, die typischerweise aus Glas oder Kunststoff besteht zu halten, um unterschiedliche Dicken durch ungleichmäßige Abstände zwischen dem Anzeigesubstrat 4 und der Abdeckung 6 zu überbrücken. Im Beispiel von Fig. 1 ist das Verbindungsmaterial ist ein flüssiger Klebstoff aus einem Zweikomponenten-Silikon, das eine schnelle Aushärtungsfähigkeit bei Raumtemperatur hat und typischerweise innerhalb von wenigen Minuten aushärten kann. Im Stand der Technik ist dieser Damm 12 als ein massives Rechteck geformte Struktur, die auf der Abdeckung 6 angeordnet ist und eine ungleichmäßige Oberfläche besitzt, in diesem Fall gekrümmt. Das Klebematerial 8 hat demnach unterschiedliche Klebedicken auf der Abdeckung 6. Der Damm 12 fasst dabei das Verbindungsmaterial 8 zwischen dem Substrat 4 und der Abdeckung 6. Unter Bezugnahme auf die Aufsicht in der Figur 1 ist auch zu erkennen, dass das Display-Substrat 4 entlang seinem Umfang von dem rechteckförmigen Damm allseitig beabstandet ist und demnach auch zu den Rahmenkanten der Abdeckung 6 allseitig einen Abstand aufweist. Dies hat zur Folge, dass im Ergebnis auch allseitig ein Füllmaterial 8 bzw. Verbindungsmaterial 8 zwischen dem Substrat 4 und der Abdeckung 6 vorhanden ist.

Das Problem des Positionierens und die damit einhergehenden Nachteile werden durch die erfindungsgemäße Lösung, wie diese im Ausführungsbeispiel nach Figur 2 gezeigt ist, beseitigt oder zumindest nennenswert verbessert.

Die Figur 2 zeigt eine Displayanordnung 1, ebenfalls umfassend ein rechteckiges, im Wesentlichen flaches Display-Substrat 4 und eine Abdeckung 6 mit einem Verbindungsbereich an dem das Display-Substrat 4 durch ein Bonding-Material 8 bzw. Verbindungsmaterial 8 geklebt ist, sowie einen rechteckförmigen Damm 12, der ein Bonding-Material enthält, wobei das Display-Substrat 4 allerdings in einer Projektion auf eine parallel zu dem flachen Display-Substrat 4 verlaufende Ebene betrachtet, entlang seinem Umfang an dem rechteckförmigen Damm 12 an zwei Seitenkanten 11 am Damm 12 oder neben der von dem Damm 12 gebildeten Rahmenkante der Abdeckung 6 anliegt und zwar vollständig entlang der beiden Seitenkanten 11.

Das Display-Substrat 4 liegt vollständig mit der oberen Seitenkante 11 und der in der Abbildung rechten Seitenkante 11 an dem Damm 12 an und zwar jeweils entlang der gesamten oberen und rechten Seitenkante 11. Die beiden Seitenkanten 11, die in diesem Ausführungsbeispiel an dem Damm 12 anliegen, sind zwei nicht gegenüberliegende, sondern über eine Ecke 14 des DisplaySubstrats 4 miteinander verbundene Seitenkanten 11.

Der Damm 12 kann integral mit der Abdeckung 6 ausgebildet sein. Wie ebenfalls in der Figur 2 ersichtlich, sind an denjenigen Seitenkanten 11 des DisplaySubstrats 4, die nicht an dem Damm 12 anliegen jeweils ein Abstandshalter 15 an der linken Seitenkante und zwei Abstandshalter 15 an der unteren Seitenkante 11 angeordnet. Die Abstandhalter 15 besitzen jeweils ein Federelement 16, welches das Display-Substrat 4 mit der jeweils gegenüberliegenden am Damm 12 anliegenden Seitenkante 11 gegen den Damm 12 drückt. Somit schieben die beiden unteren Abstandhalter 15 das Substrat 4 nach oben und der linke Abstandhalter 15 das Display-Substrats 4 nach rechts an den Damm 12.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht, welche aber unter den Wortlaut des Anspruchs 1 fallen. So können z. B. auch andere Formen der Abstandhalter als die erwähnten verwendet werden, um das DisplaySubstrat 4 in Position zu bringen und dort zu fixieren.

## Patentansprüche

1. Displayanordnung (1) mit einem im Wesentlichen rechteckigen und flachen Display-Substrat (4) und einer Abdeckung (6) mit einem Verbindungsbereich an dem das Display-Substrat (4) durch ein Bonding-Material (8) klebend befestigt ist, sowie einen rechteckförmigen Damm (12), der das Bonding-Material enthält, wobei das Display-Substrat (4) in einer Projektion auf eine parallel zu dem Display-Substrat (4) verlaufende Ebene betrachtet, entlang seinem Umfang an dem rechteckförmigen Damm (12) mit zwei seiner Seitenkanten (11) unmittelbar am Damm (12) oder der von dem Damm (12) gebildeten Rahmenkante der Abdeckung (6) anliegt, wobei das Display-Substrat (4) vollständig mit den beiden Seitenkanten (11) an dem Damm (12) anliegt und zwar jeweils entlang der gesamten Seitenkante (11), wobei die beiden Seitenkanten (11), die an dem Damm (12) anliegen, zwei nicht gegenüberliegende, sondern über eine Ecke (14) des Display-Substrats (4) miteinander verbundene Seitenkanten (11) sind, wobei zwischen wenigstens einer derjenigen Seitenkanten (11) des Display-Substrats (4), die nicht an dem Damm (12) anliegen, und dem dort daneben liegenden Damm (12) ein Abstandhalter (15) angeordnet ist.

2. Displayanordnung (1) nach Anspruch 1, **dadurch gekennzeichnet, dass** die Rahmenkante im Bereich des Damms (12) an wenigstens einer dem DisplaySubstrats (4) zugewandten Seiten eine Sägezahnkontur aufweist und das DisplaySubstrats (4) an den nach innen ragenden Sägezähnen an der Rahmenkante anliegt.

3. Displayanordnung (1) nach Anspruch 2, **dadurch gekennzeichnet, dass** die Rahmenkante an zwei einander angrenzenden Seiten eine Sägezahnkontur aufweist und das Display-Substrats (4) an jeweils den nach innen ragenden Sägezähnen mit beiden Seitenkanten (11) unmittelbar daran anliegen.

4. Displayanordnung (1) nach einem der vorhergehenden Ansprüche, **dadurch gekennzeichnet, dass** der Damm (12) integral mit der Abdeckung (6) ausgebildet ist.

5. Displayanordnung (1) nach einem der vorhergehenden Ansprüchen, **dadurch gekennzeichnet, dass** der Abstandhalter (15) wenigstens ein Federelement (16) aufweist, welches das Display-Substrats (4) mit der jeweils gegenüberliegenden am Damm (12) anliegenden Seitenkante (11) gegen den Damm (12) drückt.

6. Displayanordnung (1) nach einem der vorhergehenden Ansprüchen, **dadurch gekennzeichnet, dass** zwischen wenigstens einer oder zwei der Seitenkanten (11) des Display-Substrats (4) und dem dort daneben liegenden Damm (12) jeweils ein oder mehrere Abstandhalter (15) vorgesehen sind.

7. Verfahren zur Herstellung einer Displayanordnung (1) nach einem der vorhergehenden Ansprüche umfassend die folgenden Schritte:
a. Bereitstellen eines im Wesentlichen rechteckigen und flachen DisplaySubstrats (4) und einer Abdeckung (6) mit einem Verbindungsbereich an dem das Display-Substrat (4) durch ein Bonding-Material (8) angeklebt werden soll, wobei die Abdeckung (6) einen rechteckförmigen Damm (12) ausbildet
b. Montieren des Display-Substrats (4) derart an der Abdeckung (6), dass in einer Projektion auf eine parallel zu dem Display-Substrat (4) verlaufende Ebene betrachtet, das Display-Substrat (4) entlang seinem Umfang an dem rechteckförmigen Damm (12) mit wenigstens zwei seiner Seitenkanten (11) unmittelbar am Damm (12) oder der von dem Damm (12) gebildeten Rahmenkante der Abdeckung (6) anliegt und
c. Einfüllen mindestens eines Bonding-Materials in den Damm (12) und vorzugsweise in die zur Klebung vorgesehenen Bereiche, um das DisplaySubstrat (4) mit der Abdeckung (6) klebend zu verbinden.

8. Verfahren nach Anspruch 7, **dadurch gekennzeichnet, dass** im Schritt b) wenigstens ein mit einem Federelement ausgestatteter Abstandhalter (15) zwischen eine Seitenkante (11) des Display-Substrats (4) und der Abdeckung (6), vorzugsweise dem Damm (12) eingebracht wird, so dass das Display-Substrat (4) mit seiner gegenüberliegenden Seitenkante (11) gegen den Damm (12) gedrückt wird.

## Claims

1. A display arrangement (1) with a substantially rectangular and flat display substrate (4) and a cover (6) with a connection region on which the display substrate (4) is adhesively fastened through a bonding material (8), and a rectangularly shaped dam (12) which contains the bonding material, wherein the display substrate (4), as seen in a projection onto a plane running parallel to the display substrate (4), adjoins the rectangularly shaped dam (12) along its circumference with two of its lateral edges (11) directly on the dam (12) or the frame edge of the cover (6) formed by the dam (12), wherein the display substrate (4) completely adjoins the dam (12) with the two lateral edges (12), namely respectively along the complete lateral edge (11), wherein the two lateral edges (11) adjoining the dam (12) are two lateral edges (11) which are not opposite, but connected to one another via a corner (14) of the display substrate (4), wherein a spacer (15) is arranged between at least one of the lateral edges (11) of the display substrate (4) which do not adjoin the dam (12) and the dam (12) next to them.

2. The display arrangement (1) according to claim 1, **characterised in that** the frame edge in the region of the dam (12) has a saw-tooth contour on at least one of the sides facing the display substrate (4) and the display substrate (4) adjoins the frame edge on the saw-teeth protruding inwards.

3. The display arrangement (1) according to claim 2, **characterised in that** the frame edge has a saw-tooth contour on two sides adjacent to one another and the display substrate (4) directly adjoins them with both lateral edges (11) on the respective saw-teeth protruding inwards.

4. The display arrangement (1) according to any one of the preceding claims, **characterised in that** the dam (12) is formed integrally with the cover (6).

5. The display arrangement (1) according to any one of the preceding claims, **characterised in that** the spacer (15) has at least one spring element (16) which pushes the display substrate (4) against the dam (12) with the respective opposite lateral edge (11) adjoining the dam (12).

6. The display arrangement (1) according to any one of the preceding claims, **characterised in that** one or more respective spacers (15) are provided between at least one or two of the lateral edges (11) of the display substrate (4) and the dam (12) next to them.

7. A method for producing a display arrangement (1) according to any one of the preceding claims, comprising the following steps:
a. providing a substantially rectangular and flat display substrate (4) and a cover (6) with a connection region onto which the display substrate (4) is to be adhered by a bonding material (8), wherein the cover (6) forms a rectangularly shaped dam (12),
b. mounting the display substrate (4) on the cover (6) so that, as seen in a projection onto a plane running parallel to the display substrate (4), the display substrate (4) adjoins the rectangularly shaped dam (12) along its circumference with at least two of its lateral edges (11) directly on the dam (12) or the frame edge of the cover (6) formed by the dam (12), and
c. filling at least one bonding material into the dam (12) and preferably into the regions provided for adhesion in order to adhesively connect the display substrate (4) to the cover (6).

8. The method according to claim 7, **characterised in that** in step b), at least one spacer (15) equipped with a spring element is introduced between a lateral edge (11) of the display substrate (4) and the cover (6), preferably the dam (12), so that the display substrate (4) is pressed against the dam (12) with its opposite lateral edge (11).

## Revendications

1. Agencement d'affichage (1) comprenant un substrat d'affichage (4) sensiblement rectangulaire et plat et un couvercle (6) avec une zone de connexion à laquelle le substrat d'affichage (4) est fixé de manière adhésive par un matériau de liaison (8), ainsi qu'une barrière rectangulaire (12) contenant le matériau de liaison, dans lequel le substrat d'affichage (4), vu en projection sur un plan s'étendant parallèlement au substrat d'affichage (4), s'appuie le long de sa périphérie sur la barrière rectangulaire (12) avec deux de ses bords latéraux (11) directement sur la barrière (12) ou sur le bord du cadre du couvercle (6) formé par la barrière (12), le substrat d'affichage (4) s'appliquant entièrement par les deux bords latéraux (11) contre la barrière (12) et ce respectivement le long de l'ensemble du bord latéral (11), dans lequel les deux bords latéraux (11) qui s'appliquent contre la barrière (12) sont deux bords non opposés, mais reliés l'un à l'autre par un coin (14) du substrat d'affichage (4), une entretoise (15) étant disposée entre au moins l'un des bords latéraux (11) du substrat d'affichage (4) qui ne s'appliquent pas contre la barrière (12) et la barrière (12) qui s'y trouve à côté.

2. Agencement d'affichage (1) selon la revendication 1, **caractérisé en ce que** le bord du cadre présente un contour en dents de scie dans la zone du barrage (12) sur au moins un côté tourné vers le substrat d'affichage (4) et le substrat d'affichage (4) s'appuie sur le bord du cadre au niveau des dents de scie faisant saillie vers l'intérieur.

3. Agencement d'affichage (1) selon la revendication 2, **caractérisé en ce que** le bord du cadre présente un contour en dents de scie sur deux côtés adjacents l'un à l'autre et **en ce que** le substrat d'affichage (4) s'appuie directement sur les dents de scie faisant saillie vers l'intérieur par les deux bords latéraux (11).

4. Agencement d'affichage (1) selon l'une quelconque des revendications précédentes, **caractérisé en ce que** la digue (12) est formée d'un seul tenant avec le couvercle (6).

5. Agencement d'affichage (1) selon l'une quelconque des revendications précédentes, **caractérisé en ce que** l'entretoise (15) présente au moins un élément élastique (16) qui presse le substrat d'affichage (4) contre le barrage (12) avec le bord latéral (11) respectivement opposé et s'appuyant sur le barrage (12).

6. Agencement d'affichage (1) selon l'une quelconque des revendications précédentes, **caractérisé en ce qu'**une ou plusieurs entretoises (15) sont respectivement prévues entre au moins un ou deux des bords latéraux (11) du substrat d'affichage (4) et la barrière (12) qui s'y trouve à côté.

7. Procédé de fabrication d'un agencement d'affichage (1) selon l'une quelconque des revendications précédentes, comprenant les étapes consistant à :
a. fournir un substrat d'affichage (4) sensiblement rectangulaire et plat et un couvercle (6) ayant une zone de connexion à laquelle le substrat d'affichage (4) doit être collé par un matériau de liaison (8), le couvercle (6) formant une barrière rectangulaire (12),
b. monter le substrat d'affichage (4) sur le couvercle (6) de telle sorte que, vu en projection sur un plan parallèle au substrat d'affichage (4), le substrat d'affichage (4) s'appuie le long de sa périphérie sur la barrière rectangulaire (12) par au moins deux de ses bords latéraux (11) directement sur la barrière (12) ou sur le bord du cadre du couvercle (6) formé par la barrière (12), et
c. remplir au moins un matériau de liaison dans la barrière (12) et de préférence dans les zones prévues pour le collage, afin de relier par collage le substrat d'affichage (4) au couvercle (6).

8. Procédé selon la revendication 7, **caractérisé en ce qu'**à l'étape b), au moins une entretoise (15) équipée d'un élément de ressort est introduite entre un bord latéral (11) du substrat d'affichage (4) et le couvercle (6), de préférence la barrière (12), de sorte que le substrat d'affichage (4) est pressé contre la barrière (12) par son bord latéral opposé (11).
